# EUROPÄISCHE PATENTANMELDUNG

(11) **EP 1 081 441 A2**
(43) Veröffentlichungstag der Anmeldung: **07.03.2001**
(21) Anmeldenummer: 00117420.0
(22) Anmeldetag: 11.08.2000
(51) Int. Cl.: F24F 11/00

(54) **Luft-Volumenstromregler für Sicherheitseinrichtungen, insbesondere Laborabzüge**

(30) Priorität: 30.08.1999 DE 29915190 U
(71) Anmelder: Gebrüder Trox, Gesellschaft mit beschränkter Haftung, D-47506 Neukirchen-Vluyn (DE)
(72) Erfinder: Baumeister, Gregor, 47802 Krefeld (DE); Sadkowski, Manfred, 47608 Geldern (DE); Sefker, Thomas, Dr., 47506 Neuk.-Vluyn (DE); Wedler, Sven, 47506 Neuk.-Vluyn (DE)
(74) Vertreter: DR. STARK & PARTNER

(57) **Zusammenfassung**

Die Erfindung betrifft einen Luft-Volumenstromregler für Sicherheitseinrichtungen, insbesondere Laborabzüge, die einen geschlossenen Raum aufweisen, der einerseits an einen Luftabzugkanal angeschlossen ist und andererseits eine mit einem Stellelement, z. B. einem Schiebefenster, verschließbare Öffnung aufweist, wobei im Luftabzugkanal eine Klappe angeordnet ist, die mit einem Stelltrieb in Abhängigkeit von der Position des Stellelementes verschwenkbar ist. Um die Lufteintrittsgeschwindigkeit in den Raum konstant zu halten, soll der Stelltrieb von einem Regler beaufschlagt sein, dessen Eingang das Signal eines eine Lufteintrittsgeschwindigkeit in den Raum messender Sensor ist.

## Beschreibung

Die Erfindung betrifft einen Luft-Volumenstromregler für Sicherheitseinrichtungen, insbesondere Laborabzüge, die einen geschlossenen Raum aufweisen, der einerseits an einen Luftabzugkanal angeschlossen ist und andererseits eine mit einem Stellelement, z. B. einem Schiebefenster, verschließbare Öffnung aufweist, wobei im Luftabzugkanal eine Klappe angeordnet ist, die mit einem Stelltrieb in Abhängigkeit von der Position des Stellelementes verschwenkbar ist.

Derartige Luft-Volumenstromregler sind aus der Praxis bekannt. Die Position des Stellelementes (Schiebefenster) wird mit Hilfe von Schaltelementen, z. B. Endschaltern oder Potentiometern erfasst, deren elektrische oder pneumatische Signale zum Verstellen oder Verschwenken der Klappe verwendet werden. Die Erfassung verschiedener Positionen des Stellelementes (Schiebefensters), z. B. bei vertikaler oder horizontaler Verschiebung, erfordert damit einen verhältnismäßig hohen Mess- und Geräteaufwand.

Aufgabe der Erfindung ist es deshalb, die Lufteintrittsgeschwindigkeit in dem Raum konstant zu halten.

Diese Aufgabe wird dadurch gelöst, dass der Stelltrieb von einem Regler beaufschlagt ist, dessen Eingang das Signal eines eine Lufteintrittsgeschwindigkeit in den Raum messenden Sensors ist. Durch Messung der Lufteintrittsgeschwindigkeit ist es möglich, unabhängig von den sonstigen Bedingungen die Lufteintrittsgeschwindigkeit durch einen bei mehr oder weniger geöffnetem Stellelement (Schiebefenster) verbleibenden Öffnungsquerschnitt konstant zu halten.

Nach bevorzugter Ausführung der Erfindung gelingt das sogar dann, wenn der Sensor in einem offenen, von außen zum Raum führenden Durchgang angeordnet ist. Dieser Durchgang sollte vorzugsweise mit Abstand zur Öffnung angeordnet sein. Der Sensor erfasst ständig die Geschwindigkeit der in den Raum durch den verbleibenden Öffnungsquerschnitt und alle anderen gegebenenfalls vorhandenen Öffnungen eintretenden Luft. Sein Ausgangssignal wird an den Regler weitergeleitet, der je nach Anforderung den Stelltrieb veranlasst, die Klappe im Luftabzugkanal zu verschwenken.

Der Regler kann ein Proportionalregler sein. Er kann auch einstellbar sein.

Zum Ausgleich von Druckschwankungen im Luftabzugkanal empfiehlt es sich, eine Feder zwischen der Klappe und dem Stelltrieb anzuordnen, so dass die Klappe selbsttätig auf Druckschwankungen im Luftabzugkanal reagiert.

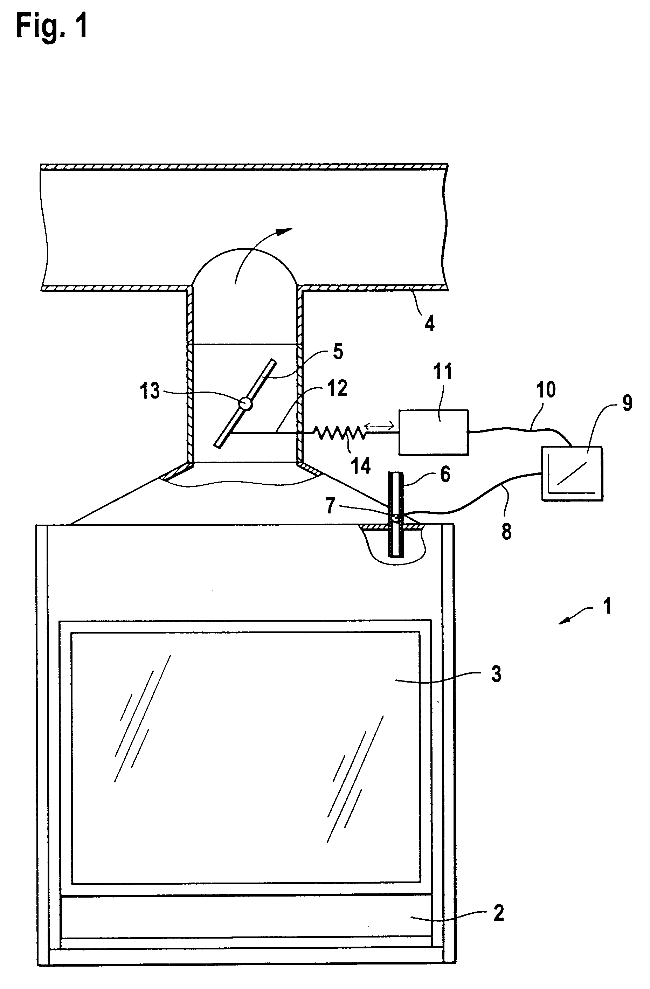

Im Folgenden wird ein in der Zeichnung dargestelltes Ausführungsbeispiel der Erfindung erläutert. Die einzige Figur zeigt schematisch und teilweise geschnitten einen Laborabzug mit einem Luft-Volumenstromregler.

Der dargestellte Laborabzug weist ein Gehäuse 1 auf, das einen bis auf eine Öffnung 2 geschlossenen Raum bildet. Die Öffnung 2 ist mit einem als Schiebefenster ausgebildeten Stellelement 3 mehr oder weniger verschließbar. An das obere Ende des Gehäuses 1 schließt ein Luftabzugkanal 4 an, in dem eine schwenkbare Klappe 5 angeordnet ist.

Ebenfalls am oberen Ende des Gehäuses 1, jedoch mit Abstand zur Öffnung 2, befindet sich ein beidseitig offener Durchgang 6, der bei der dargestellten Ausführung als Röhrchen ausgebildet ist, durch das ebenfalls Luft in das Gehäuse 1 eintreten kann. Im Durchgang 6 ist ein Sensor 7 angeordnet, der die Lufteintrittsgeschwindigkeit im Durchgang 6 erfasst.

Vom Sensor 7 führt eine Leitung 8 zu einem Regler 9, der bei der dargestellten Ausführung ein Proportionalregler ist, dessen Charakteristik einstellbar ist. Vom Regler 9 führt eine Leitung 10 zu einem Stelltrieb 11, der mechanisch, z. B. über einen Seilzug 12 mit der Klappe 5 verbunden ist. Der Seilzug 12 greift an der Klappe 5 zu dessen Schwenkachse 13 an. Im Übrigen ist in den Seilzug 12 eine Zugfeder 14 integriert.

Der Sensor 7, der Regler 9 und der Stelltrieb 11 können elektrisch oder pneumatisch arbeiten. Entsprechendes gilt für die Leitungen 8 und 10.

Wird die Position des Stellelementes 3 (Schiebefenster) verändert, dann ändert sich auch der Querschnitt der Öffnung 2 und damit die Eintrittsgeschwindigkeit durch den verbleibenden Öffnungsquerschnitt. Gleichzeitig ändert sich aber auch die Lufteintrittsgeschwinigkeit im Durchgang 6, die vom Sensor 7 erfasst wird. Das Ausgangssignal des Sensors 7 wird im Regler 9 verarbeitet, der seinerseits ein Signal an den Stelltrieb 11 liefert, so dass dieser die Klappe 5 so verstellt, dass die Lufteintritts. geschwindigkeit im verbleibenden Querschnitt der Öffnung 3 konstant bleibt. Die Zugfeder 14 verstellt die Klappe 5 selbsttätig und unabhängig vom Regler 9 bei Druckänderungen im Luftabsaugkanal.

## Patentansprüche

1. Luft-Volumenstromregler für Sicherheitseinrichtungen, insbesondere Laborabzüge, die einen geschlossenen Raum aufweisen, der einerseits an einen Luftabzugkanal (4) angeschlossen ist und andererseits eine mit einem Stellelement (3), z. B. einem Schiebefenster, verschließbare Öffnung (2) aufweist, wobei im Luftabzugkanal (4) eine Klappe (5) angeordnet ist, die mit einem Stelltrieb (11) in Abhängigkeit von der Position des Stellelementes (3) verschwenkbar ist, dadurch gekennzeichnet, dass der Stelltrieb (11) von einem Regler (9) beaufschlagt ist, dessen Eingang das Signal eines eine Lufteintrittsgeschwindigkeit in den Raum messenden Sensors (7) ist.

2. Luft-Volumenstromregler nach Anspruch 1, dadurch gekennzeichnet, dass der Sensor (7) in einem offenen, von außen zum Raum führenden Durchgang (6) angeordnet ist.

3. Luft-Volumenstromregler nach Anspruch 1 oder 2, dadurch gekennzeichnet, dass der Durchgang (6) mit Abstand zur Öffnung (2) angeordnet ist.

4. Luft-Volumenstromregler nach einem der Ansprüche 1 bis 3, dadurch gekennzeichnet, dass der Regler (9) ein Proportionalregler ist.

5. Luft-Volumenstromregler nach einem der Ansprüche 1 bis 4, gekennzeichnet durch einen einstellbaren Regler (9).

6. Luft-Volumenstromregler nach einem der Ansprüche 1 bis 5, gekennzeichnet durch eine Feder (14) zwischen der Klappe (5) und dem Stelltrieb (11).
